# EUROPEAN PATENT SPECIFICATION

(11) **EP 2 192 166 B1**
(45) Date of publication and mention of the grant of the patent: **29.04.2015**
(21) Application number: 09177259.0
(22) Date of filing: 26.11.2009
(51) Int. Cl.: C08G 77/20

(54) **Coating composition**
Beschichtungszusammensetzung
Composition de revêtement

(30) Priority: 26.11.2008 GB 0821545
(43) Date of publication of application: 02.06.2010
(73) Proprietor: Pulse Roll Label Products Ltd., Yate Bristol BS37 5HL (GB)
(72) Inventor: Seward, Gary, Chippenham, Wiltshire SN14 6JT (GB); Price, Christopher, Warmley, Bristol BS30 5JS (GB); Addicott, Martin James, Bath, Somerset BA3 4HG (GB)
(74) Representative: Macpherson, Craig Stuart

(56) References cited:
- EP-A1- 0 006 705
- EP-A1- 1 076 081
- EP-A1- 1 772 479
- WO-A2-01/77240
- US-A- 5 888 649

## Description

The present invention relates to gloss coating compositions, in particular release coating compositions, and their method of application, for example, for use in the manufacture of self adhesive labels.

Self adhesive labels are used in a wide variety of applications and are favoured by users as they are not messy and they do not require the separate application of an adhesive. Conventional self adhesive labels have an adhesive coating applied to a reverse side of the label and they are affixed to a support material and supplied in sheets or rolls. Release coatings are applied to the support material to allow subsequent removal label from the support material. The release coating must permit the label to be easily removed from the support material without damage to the label, but it must also permit the label to adhere to the support material until a user wishes to remove it.

One disadvantage of the self adhesive labels described above is that they are attached to a support material, often called a liner, which becomes waste material once the label has been removed. This means that for every label used at least the same amount of waste material is created. An alternative to these forms of self adhesive labels are so-called "linerless" labels in which a release coating is applied to a top face of a label (often a printed surface) and the labels are formed into a roll such that the adhesive coating on the reverse side of one label in the roll is adhered to a release coating applied to a top face of another of the labels in the roll. In this way it is possible to form a roll of self adhesive labels in which there is no support material and, therefore, no waste material.

In linerless labels used, for example, in food packaging the release coatings are required to protect printed materials which will be visible when the label is used. It is therefore very important that the removal of a label does not have a detrimental effect on the aesthetic appearance of the printed surface. Coated surfaces may be papers, boards, or plastics of various types. Many different adhesives are in use in the market and the conventional solution is to apply a silicone release coating to protect the surface and allow easy release of the adhesive when unwinding the reels. It is a requirement that the adhesive releases from the coating, leaving no image of the adhesive, no residue and that the unwinding characteristics are consistent over storage periods of many months.

A number of release coatings are available and while they function satisfactorily a number of drawbacks have been identified, particularly in terms of the curing of the coatings. Many of the known release coatings are radiation curable. Conventional radiation curable release coatings are typically either:
- Free Radical in nature. These coatings typically require inerting with Nitrogen gas. This restricts the ease of application in many sectors of the printing and coating market to machines with costly nitrogen gas control machinery and control systems, and suffers from the drawback of cost of gas. Free Radical curing coating products exist to improve release but are of low gloss value; or
- Cationic systems. These systems are often preferred due to there being no requirement for nitrogen gas. However, these coatings are high in cost and easily chemically 'poisoned' due to the chemically sensitive curing mechanism. Materials that cause this chemical poisoning will often occur in normal print or coating departments, thus creating a high risk of contamination.

It has been observed that currently available release coatings and conventional curing systems can have some undesirable properties. The release force, i.e. the force required to be applied to the label to remove it from the roll, can be too high. Unwinding of the coated, wound-up reels on industrial application machinery can be associated with an undesirable level of noise as the adhesive layer is removed from the release coating. In addition, long term storage can also result in failure to release as the adhesive bond to the release coat increases to unacceptable levels. In orderto obtain acceptable release properties currently available release coatings tend to have a matt finish, i.e. a gloss value of less than 15 gloss units as measured on a Minigloss 101 N. Matt coatings are not as attractive to consumers and there is therefore a desire for gloss release coating compositions.

Other curing systems exist, i.e. water or solvent borne types, but these are not preferred by the printing and coating industry due to the high energy requirement for drying and cross linking of the printed or coated layer, or poorer performance characteristics.

In conventional coatings the release coated layer and the adhesive coated layer (referred to as the adhesive label stock or laminate) is usually prepared in large reels and subsequently slit to the required width for use on narrow width presses. In these cases the adhesive layer is applied to all of the reverse (not in pattern) as manufacturers of the large reels of coated laminate are generally not able to apply the release coat or adhesive in a pattern sultable for the end use application. Therefore there can be considerable waste associated with the current application process.

It is an object of the present invention to overcome some of the problems of the prior art, or at least to provide an alternative coating composition.

A gloss coating composition comprising:
at least one tetra-functional acrylated monomer or oligomer;
at least one silicone in the range from 12%-25% by weight of composition; and
silica and/or at least one silica containing composition in the range from 0.1%-5% by weight of composition.

In an embodiment of the invention the composition further comprises at least one photoinitiator.

Coating compositions according to the present invention can be cured using Ultra Violet (UV) raditation, providing a photoinitiator is present. Electron Beam (EB) radiation curable coatings can be formulated with or without the use of photoinitiators. Both UV and EB radiation curable compositions have the advantage that they do not require the use of nitrogen inerting systems. The gloss coating compositions can be used in self adhesive labels with liners and in linerless labels.

The described gloss coatings are usually applied over all of the support substrate, or they can be applied in a pre-determined pattern. Similarly, the adhesive on the adhesive coated layer can be applied all over the label, or in a pattern.

One particular application for the gloss coating composition of the present invention is as a release coating in 'Peel and Read' labels, where numerous pages are constructed in a way which enables the label to perform like a small book. Cationic curable coatings are a currently preferred option for the release coating in this market but these suffer from the same problems of cost, contamination/poisoning and incompatibility described above. Multi part labels can be produced in a single pass on a printing press, as after the release varnish is applied, the web is split and re laminated thus producing a multi part label. Cationic release coatings also have the drawback in this application as they have poor scuff/rub resistant properties.

In an embodiment of the invention the gloss coating composition further comprises at least one amine synergist. In an embodiment of the invention the at least one amine synergist is present in the range from 0% or 1% or 5% or 10% or 15% or 20% by weight of composition. In an embodiment of the invention the at least one amine synergist is present in the range up to 5% or 10% or 15% or 20% or 25% by weight of composition.

It is known that amine synergists can be used to ensure thorough curing of a coating, in particular the surface. In an embodiment of the invention the at least one amine synergist may be selected from the group comprising triethanolamine, amietol M12 (Methyl diethanolamine), amietol M21 (Dimethyl ethanolamine), acrylated amine compounds, such as amine modified polyethers or amine modified polyether acrylate oligomer, or mixtures thereof. In particular acrylated amine synergists such as CN341, CN3705 ,CN3715, CN3735, CN381 supplied by Sartomer may advantageously be used. The amine modified polyether acrylate oligomers that can be used include CN501,CN503,CN550 and CNUVA421 (also supplied by Sartomer). In particular, CN386 was found to be particularly useful.

In an embodiment of the invention the at least one acrylated monomer or oligomer is present in the range from 40% or 45% or 50% or 55% or 60% or 65% or 70% by weight of composition. In an embodiment of the invention the at least one acrylated monomer or oligomer is present in the range up to 45% or 50% or 55% or 60% or 65% or 70% or 75% by weight of composition.

In an embodiment of the invention the at least one acrylated monomer or oligomer is a reactive acrylated monomer or oligomer. In an embodiment of the invention the at least one acrylated monomer or oligomer is ditrimethylolpropane tetraacrylate. Tetra-functional acrylates are particularly beneficial in reducing curing time, which offers benefits in terms of the quality of the finish of the gloss coating composition.

It has been observed that particularly advantageous gloss coating compositions were formed from the higher functional acrylates. In particular, it was found that an optimum result was obtained with a tetra-functional acrylate such as ditrimethylolpropane tetraacrylate (Sartomer SR355) It was also found that gloss coating compositions could be prepared with epoxy acrylates, aliphatic urethane acrylates, aromatic urethane acrylates and polyester acrylates.

In an embodiment of the invention the at least one silicone is present in the range from 12% or 14% or 16% or 18% or 20% or 22% by weight of composition. In an embodiment of the invention the at least one silicone is present in the range up to 10% or 12% or 14% or 16% or 18% or 20% or 22% or 24% or 25% by weight of composition.

Silicones are well known in their effect on the surface properties of coatings. The release characteristic (release force) and noise of release can be adjusted by careful selection of the appropriate silicone compounds.

Silicones, for example acrylated polysiloxane compounds and silicone polyether acrylate compounds, have been found to be particularly useful in coating compositions according to the present invention. Compounds from the Tego range of additives (supplied by Evonik Tego Chemie GmbH) have been found to be useful, in particular Tegorad 2100, 2200N,2250, 2300, 2500, 2600, 2650,2700. Blends of one or more of the silicone containing compounds have been found to be useful. In particular, blends of Tego 2250 and 2700 in various combinations have been found to offer particularly advantageous properties. In particular, it has been found that a mixture of 12% Tegorad 2700N (by total weight of composition) and 2% Tegorad 2250 (by total weight of composition) is effective. Non acrylated silicones, such as Tego Glide 432 supplied by Evonik Tego Chemie GmbH and DC57 supplied by Dow Chemical, can also be used. In addition to the inclusion of silicone containing compounds it has been discovered that particulate materials, such as waxes, polyethylene, polypropylene, PTFE, natural wax compounds and mixtures can also be added and are effective in controlling the release. In an embodiment of the invention the particulate materials comprise nano-sized particles. Nanosized particles can have the ability to effect the tightness and the noise of release of the composition.

In an embodiment of the invention the at least one silica containing composition is present in the range from 0.1% or 0.5% or 1% or 2% or 3% or 4% by weight of composition. In an embodiment of the invention the at least one silica containing composition is present in the range up to 0.5% or 1% or 2% or 3% or 4% or 5% by weight of composition. Testing has shown that silica levels above 5% are undesirable as they cause the coating composition to have a matt finish.

The use of silica was found to be advantageous and particularly silicas described as amorphous fumed silica, synthetic fumed silica, mixtures of silica with waxes (such as Ineos Gasil UV 70C supplied by Fitz Chem Corporation, Degussa TS100 supplied by Evonik Industries AG and/or Kromachem Reolosil MT 10 supplied by Tokuyama). Pre- mixing of the silica in the acrylated monomers or oligomers is preferable to improve the consistency/homogeneity of the finished composition.

In an embodiment of the invention the at least one photoinitiator is present in the range from 5% or 6% or 7% or 8% or 9% or 10% or 11 % or 12% or 13% or 14% or 15% or 16% or 17% by weight of composition. In an embodiment of the invention the at least one photoinitiator is present in the range up to 6% or 7% or 8% or 9% or 10% or 11% or 12% or 13% or 14% or 15% or 16% or 17% or 18% by weight of composition.

Photoinitiators are required to photocure the reactive coating when it is exposed to high energy UV radiation sources. Other compositions according to the present invention can be cured with EB radiation. A wide variety of photoinitiators can be used as is well known in the art. Free radicals are produced on irradiation of initiators such as benzophenone, 1-hydroxycyclohexyl phenyl ketone, 2-benzyl-2 -diethylamino-(4 morpholinophenyl) butan-1-one, bis (2,6-dimethylamino)-2,4,4-trimethylpentylphosphine oxide, methyl benzoyl benzoate, 4-phenyl benzophenone 4-methyl benzophenome. The use of mixtures of initiators has been found to be particularly useful. Some commercial sources of suitable photoinitiators are Ciba, BASF, IGM, Lamberti, Rahn and Lambsons.

The photoinitiators can be added individually and stirred until dissolved or melted together and the resultant liquid initiator mix added to the other components whilst stirring, thus ensuring that the photoinitiators are completely dissolved.

In an embodiment of the invention the gloss coating composition further comprises at least one anti-foam agent. Many grades/suppliers of anti-foam have been found to be effective. In particular, solutions containing amorphous silicone dioxide, such as Foamblast 20F-UVD (supplied by Lubrizol) were found to be useful.

In an embodiment of the invention the viscosity of the gloss coating composition is in the range from 100 cps or 250cps or 500cps. In an embodiment of the invention the viscosity of the gloss coating composition is in the range up to 600cps or 750cps or 1000cps or 1500cps or 2000cps or 2500cps or 3000cps.

In an embodiment of the invention the gloss coating has a gloss value in the range from 25 to 30 to 35 to 40 to 45 to 50 to 55 gloss units as measured using a Sheen Minigloss 101 N. In an embodiment of the invention the gloss coating has a gloss value in the range up to 30 to 35 to 40 to 45 to 50 to 55 to 60 to 65 to 70 to 75 to 80 gloss units as measured using a Sheen Minigloss 101 N. The Sheen Minigloss 101N is available from Sheen Instruments Limited of Redhill, Surrey, England and measures gloss using a measuring geometry of 60° and utilises a scale from 0.1 to 100 gloss units in accordance with BS EN ISO 2813 and BS 3900-D5, in which low values represent a matt finish and high values a gloss finish.

According to a second aspect of the present invention there is provided a linerless label comprising a label substrate having a top face and a bottom face, wherein a pressure sensitive adhesive is present on at least a portion of the bottom face and a gloss release coating, formed from a cured gloss coating composition according to any preceding claim, is present on at least a portion of the top face.

In an embodiment of the invention the adhesive is present on all of the top face. In an embodiment of the invention the release coating is present on all of the bottom face.

In an embodiment of the invention a plurality of labels are formed into a roll of labels in which the adhesive on the bottom face of each of the labels is adhered to a release coating on the top face of one of the labels.

### Example

A coating composition according to the present invention was prepared by mixing the following compounds in the order listed below until homogeneous. As noted above, the photoinitiators (9, 10, 11) can be added individually and stirred until dissolved or melted together and the resultant liquid initiator mix added to the other components whilst stirring, thus ensuring that the photoinitiators are completely dissolved.

The silica (2) can be pre-mixed in the acrylated monomers or oligomers to improve the consistency/homogeneity of the finished composition.

| | |
|---|---|
| 1. Dtrimethylolpropane tetraacrylate | 38.0 % |
| 2. Amorphous Fumed Silica | 2.0 % |
| 3. Epoxy Acrylate/ Propoxylated Glycerol Triacrylate blend | 6.5 % |
| 4. Propoxylated Glycerol Triacrylate | 20.0 % |
| 5. Sartomer CN386 | 11.0 % |
| 6. Silicone Polyether Acrylate | 12.0 % |
| 7. Acrylated Polysiloxane | 2.0 % |
| 8. Foamblast 20F-UVD | 1.0 % |
| 9. Methly Benzoyl Benzoate | 3.8 % |
| 10. 4-Phenyl Benzophenone | 2.2 % |
| 11. 4- Methyl Benzophenone | 1.5 % |

The resulting gloss coating composition can be used as a release coating composition for self adhesive labels, either of the type which comprise a removable liner, or in so-called linerless labels. The release coating composition can also be used in so-called "Peel and Read" labels as described above. The composition is applied to a label substrate as a coating of a pre-determined thickness. The coated label substrate is then subjected to UV radiation to cure the coating composition and provide a release coating. The labels are formed using conventional methods as is well known to persons skilled in the art and the coating composition is cured by exposure to a high energy UV (or Electron Beam) source. The UV source was a 100 watts/cm medium pressure mercury lamp. High or low pressure lamps, or doped sources can also be used. The coating composition may be applied to a label or support material by a variety of methods, such as, but not limited to, silk screen printing, lithography, gravure, roller coating or flexography.

The release coating exhibits excellent release when unwound from a roll, even after long periods of storage. The release noise has also been found to be within acceptable levels. The coating compositions may also be coloured by the inclusion of suitably coloured material, typically a pigment, which may be organic or inorganic in nature. Other additives may also be included in the coating composition as known to persons skilled in the art. It has been found that release coatings according to the present invention offer improved scuff/rub resistance over some currently available compositions. Rub resistance is measured on a Mickle Rub Tester and the composition is seen to show enhanced properties, even after being subjected to 100 rubs with a constant weight of 2lbs per square inch being applied.

The coating is required to be of sufficient gloss, as opposed to previous coatings available that are described as low gloss or matt in nature. The gloss level is dependant of the film weight applied, supporting material (primer, ink and substrate) but is generally in the region of 25-80 Gloss Units as measured on a Sheen Minigloss 101 N. It is generally accepted that low gloss coatings are in the region of 10-15 gloss units. The release coatings according to the present invention typically exhibit gloss levels of around 35-60 gloss units, depending on the inks and substrate being printed or overprinted.

Although a preferred embodiment has been described, this is only by way of example. It will be appreciated by those skilled in the art that many modifications and variations of the present invention are possible within the scope of the invention as defined in the claims.

## Claims

1. A gloss coating composition comprising:
at least one tetra-functional acrylated monomer or oligomer;
at least one silicone in the range from 12%-25% by weight of composition; and
silica and/or at least one silica containing composition in the range from 0.1%-5% by weight of composition.

2. A gloss coating composition according to claim 1, wherein the composition further comprises at least one photoinitiator.

3. A gloss coating composition according to claim 1 or claim 2, wherein the at least one acrylated monomer or oligomer is present in the range from 40%-75% by weight of composition.

4. A gloss coating composition according to any preceding claim, wherein the at least one tetra-functional acrylated monomer or oligomer is ditrimethylolpropane tetraacrylate.

5. A gloss coating composition according to any preceding claim, wherein the at least one silicone comprises acrylated polysiloxane compounds or silicone polyether acrylate compounds or mixtures thereof.

6. A gloss coating composition according to claim 2, or any one of claims 3-5 as dependent on claim 2, wherein the at least one photoinitiator is present in the range from 5%-18% by weight of composition.

7. A gloss coating composition according to any preceding claim, further comprising at least one amine synergist.

8. A gloss coating composition according to claim 7, wherein the amine synergist is present in the range from 1% to 25% by weight of composition.

9. A gloss coating composition according to any preceding claim, wherein the viscosity is in the range from 100cps to 3000cps.

10. A gloss coating composition according to any preceding claim, wherein the coating has a gloss value of from 25 to 80 gloss units as measured using a Sheen Minigloss 101 N.

11. A linerless label comprising a label substrate having a top face and a bottom face, wherein a pressure sensitive adhesive is present on at least a portion of the bottom face and a release coating, formed from a cured coating composition according to any preceding claim, is present on at least a portion of the top face.

12. A roll of labels comprising a plurality of labels according to claim 11.

13. A method of manufacturing a linerless label comprising the steps of applying a coating composition according to any one of claims 1-9 to at least a portion of one face of a label and exposing said face of the label to a radiation source to cure the coating composition and form a release coating.

## Patentansprüche

1. Glanzbeschichtungszusammensetzung, Folgendes umfassend:
wenigstens ein tetrafunktionelles acryliertes Monomer oder Oligomer;
wenigstens ein Silikon im Bereich von 12-25 Gew.-% der Zusammensetzung; und
Siliziumoxid und/oder wenigstens eine Siliziumoxid enthaltende Zusammensetzung im Bereich von 0,1-5 Gew.-% der Zusammensetzung.

2. Glanzbeschichtungszusammensetzung nach Anspruch 1, wobei die Zusammensetzung ferner wenigstens einen Fotoinitiator aufweist.

3. Glanzbeschichtungszusammensetzung nach Anspruch 1 oder Anspruch 2, wobei das wenigstens eine acrylierte Monomer oder Oligomer im Bereich von 40-75 Gew.-% der Zusammensetzung vorliegt.

4. Glanzbeschichtungszusammensetzung nach einem der vorhergehenden Ansprüche, wobei das wenigstens eine tetrafunktionelle acrylierte Monomer oder Oligomer Di-Trimethylolpropan-Tetraacrylat ist.

5. Glanzbeschichtungszusammensetzung nach einem der vorhergehenden Ansprüche, wobei das wenigstens eine Silikon acrylierte Polysiloxan-Verbindungen oder Silikonpolyetheracrylat-Verbindungen oder Gemische daraus enthält.

6. Glanzbeschichtungszusammensetzung nach Anspruch 2 oder einem der Ansprüche 3-5, wenn abhängig von Anspruch 2, wobei der wenigstens eine Fotoinitiator im Bereich von 5-18 Gew.-% der Zusammensetzung vorliegt.

7. Glanzbeschichtungszusammensetzung nach einem der vorhergehenden Ansprüche, ferner wenigstens einen Aminsynergisten umfassend.

8. Glanzbeschichtungszusammensetzung nach Anspruch 7, wobei der Aminsynergist im Bereich von 1-25 Gew.-% der Zusammensetzung vorliegt.

9. Glanzbeschichtungszusammensetzung nach einem der vorhergehenden Ansprüche, wobei die Viskosität im Bereich von 100 cPs bis 3.000 cPs liegt.

10. Glanzbeschichtungszusammensetzung nach einem der vorhergehenden Ansprüche, wobei die Beschichtung einen Glanzgrad von 25 bis 80 Glanzeinheiten, gemessen mit einem Sheen Minigloss 101 N, aufweist.

11. Trägerbandloses Etikett, umfassend ein Etikettensubstrat mit einer Oberseite und einer Unterseite, wobei auf wenigstens einem Abschnitt der Unterseite ein druckempfindlicher Klebstoff vorhanden ist und auf wenigstens einem Abschnitt der Oberseite eine Trennbeschichtung, die aus einer gehärteten Beschichtungszusammensetzung nach einem der vorhergehenden Ansprüche gebildet ist, vorhanden ist.

12. Etikettenrolle, umfassend eine Vielzahl von Etiketten nach Anspruch 11.

13. Verfahren zum Herstellen eines trägerbandlosen Etiketts, umfassend die folgenden Schritte: Aufbringen einer Beschichtungszusammensetzung nach einem der Ansprüche 1-9 auf wenigstens einem Abschnitt einer Seite eines Etiketts und Aussetzen der Seite des Etiketts einer Strahlenquelle, um die Beschichtungszusammensetzung zu härten und eine Trennbeschichtung auszubilden.

## Revendications

1. Composition de revêtement brillant comprenant :
au moins un monomère ou oligomère acrylé tétrafonctionnel ;
au moins une silicone dans la plage de 12 % à 25 % en poids de la composition ; et
de la silice et/ou au moins une composition contenant de la silice dans la plage de 0,1 % à 5 % en poids de la composition.

2. Composition de revêtement brillant selon la revendication 1, dans laquelle la composition comprend en outre au moins un photoinitiateur.

3. Composition de revêtement brillant selon la revendication 1 ou la revendication 2, dans laquelle le au moins un monomère ou oligomère acrylé est présent dans la plage de 40 % à 75 % en poids de la composition.

4. Composition de revêtement brillant selon l'une quelconque des revendications précédentes, dans laquelle le au moins un monomère ou oligomère acrylé tétrafonctionnel est le tétraacrylate de ditriméthylolpropane.

5. Composition de revêtement brillant selon l'une quelconque des revendications précédentes, dans laquelle la au moins une silicone comprend des composés de poly(siloxane) acrylé ou des composés de poly(éther) de silicone acrylé ou leurs mélanges.

6. Composition de revêtement brillant selon la revendication 2, ou l'une quelconque des revendications 3 à 5 lorsqu'elles dépendent de la revendication 2, dans laquelle le au moins un photoinitiateur est présent dans la plage de 5 % à 18 % en poids de la composition.

7. Composition de revêtement brillant selon l'une quelconque des revendications précédentes comprenant en outre au moins un synergiste amine.

8. Composition de revêtement brillant selon la revendication 7, dans laquelle le synergiste amine est présent dans la plage de 1 % à 25 % en poids de la composition.

9. Composition de revêtement brillant selon l'une quelconque des revendications précédentes, dans laquelle la viscosité est dans la plage de 100 cps à 3000 cps.

10. Composition de revêtement brillant selon l'une quelconque des revendications précédentes, dans laquelle le revêtement a une valeur de brillance de 25 à 80 unités de brillance telle que mesurée en utilisant un Sheen Minigloss 101 N.

11. Étiquette sans bande support comprenant un substrat d'étiquette ayant une face supérieure et une face inférieure, dans laquelle un adhésif sensible à la pression est présent sur au moins une partie de la face inférieure et d'un revêtement amovible, formé à partir d'une composition de revêtement durcie selon l'une quelconque des revendications précédentes, est présent sur au moins une partie de la face supérieure.

12. Rouleau d'étiquettes comprenant une pluralité d'étiquettes selon la revendication 11.

13. Procédé de fabrication d'une étiquette sans bande support comprenant les étapes d'application d'une composition de revêtement selon l'une quelconque des revendications 1 à 9 à au moins une partie d'une face d'une étiquette et d'exposition de ladite face de l'étiquette à une source de rayonnement pour durcir la composition de revêtement et former un revêtement amovible.
